# FASCICULE DE BREVET EUROPEEN

(11) **EP 1 632 866 B1**
(45) Date de publication et mention de la délivrance du brevet: **11.06.2008**
(21) Numéro de dépôt: 05291791.1
(22) Date de dépôt: 26.08.2005
(51) Int. Cl.: G06F 13/40, H04L 29/06

(54) **Interface de communication**
Kommunikationsschnittstelle
Communication interface

(30) Priorité: 03.09.2004 FR 0409363
(43) Date de publication de la demande: 08.03.2006
(73) Titulaire: STMICROELECTRONICS SA, 92120 Montrouge (FR)
(72) Inventeur: Chalopin, Hervé, 13400 Aubagne (FR); Tabaries, Laurent, 13400 Aubagne (FR)
(74) Mandataire: Verdure, Stéphane

(56) Documents cités:
- EP-A- 0 629 956
- EP-A- 0 883 083
- CA-A1- 2 303 565
- US-A1- 2002 169 906
- US-B1- 6 549 966
- PATENT ABSTRACTS OF JAPAN vol. 1999, no. 08, 30 juin 1999 (1999-06-30) -& JP 11 088380 A (HITACHI LTD), 30 mars 1999 (1999-03-30)

## Description

L'invention se rapporte à une interface de communication. Plus particulièrement, une interface de communication entre au moins deux bus de communication utilisant deux protocoles de communication différents.

Dans le monde du multimédia, les transferts de données entre deux ou plusieurs appareils sont de plus en plus nombreux. Les appareils concernés peuvent être des produits de grande consommation tels que magnétoscope, télévision, lecteur DVD, chaîne HIFI et autres ou appartenir au monde informatique et notamment au monde des ordinateurs personnels (ci-après PC de l'anglais Personal Computer). La tendance, à l'heure actuelle, est de faire communiquer tous les appareils entre eux. Cependant, le transfert de données nécessite des débits plus au moins importants suivant le type d'appareil et suivant le type de données. Des protocoles de communication plus au moins dédiés aux différents appareils ou types d'appareils sont utilisés. A l'heure actuelle, le seul appareil qui soit vraiment interconnectable avec sensiblement tous les autres est le PC, si celui-ci dispose d'une interface spécifique pour chaque protocole de communication.

Cependant, certains ordinateurs personnels, de type portables, ont une taille physique réduite qui ne permet pas nécessairement d'intégrer une nouvelle interface de communication et ils ne disposent pas nécessairement de toutes les interfaces de communication disponibles sur le marché.

De plus, certains appareils sont plutôt dédiés au monde informatique et d'autres plutôt dédiés au monde des produits de grande consommation et il est difficile d'interconnecter des appareils appartenant à ces deux mondes sans passer par l'intermédiaire d'un PC.

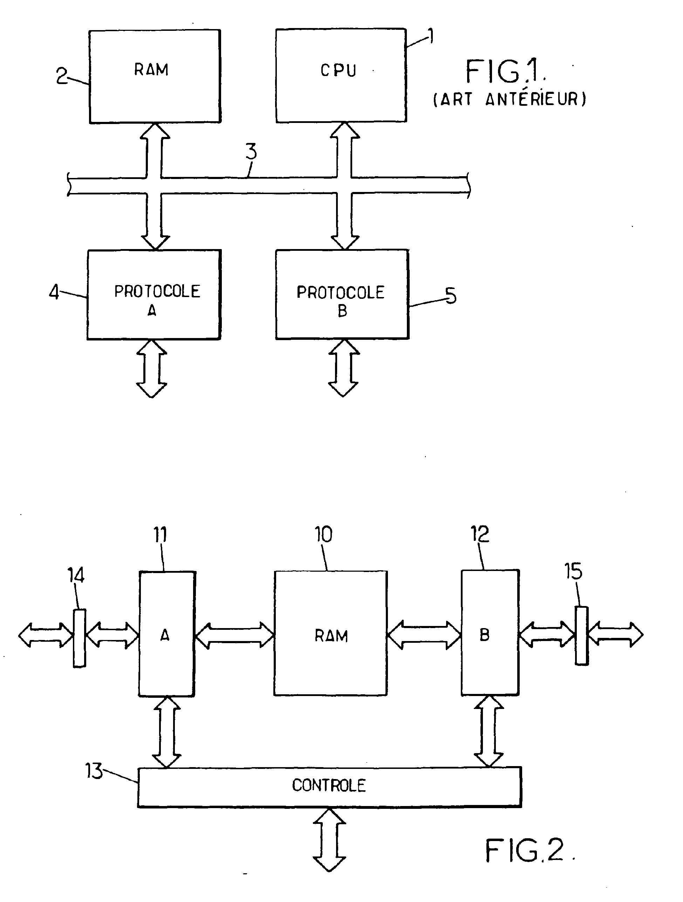

A l'heure actuelle, si l'on désire interfacer un dispositif fonctionnant selon un protocole de communication dédié au monde du PC à un autre dispositif dédié au monde des produits de grande consommation, l'interfaçage se fait par l'intermédiaire d'un PC, tel que, par exemple représenté de manière schématique sur la figure 1. Le PC représenté comporte principalement une unité centrale de traitement (CPU) 1 disposant d'une mémoire centrale 2 couplée au CPU 1 par un bus 3 et disposant d'une première interface de communication 4 permettant de communiquer selon un premier protocole et d'une deuxième interface de communication 5 permettant de communiquer selon un deuxième protocole. Un PC ainsi équipé permet de faire dialoguer deux appareils fonctionnant respectivement selon les deux protocoles, par exemple le protocole de bus série universel, plus connu sous le nom de standard USB (de l'anglais Universal Serial Bus) et le deuxième protocole étant, par exemple le protocole IEEE1394. Un message reçu en conformité avec l'un des protocoles par l'une des interfaces 4 ou 5 provoque l'émission d'une interruption à destination du CPU 1 qui va aller chercher un sous-programme préalablement chargé dans la mémoire centrale 2. Le sous-programme va permettre de stocker temporairement les données reçues dans la mémoire 2, puis les envoyer à l'autre interface 5 ou 4 afin de les retransmettre selon l'autre protocole.

Comme indiqué précédemment, il faut que le PC dispose d'un sous-programme spécifique pour réaliser le transcodage entre les deux protocoles. Un tel sous-programme neutralise alors l'usage des interfaces de communication 4 et 5 permettant au PC de dialoguer par l'intermédiaire de ces interfaces. Il est alors nécessaire à un utilisateur d'avoir un minimum de connaissance pour pouvoir changer le paramétrage de ces interfaces 4 et 5 suivant l'usage que l'on souhaite en faire.

Cet état de la technique rend relativement complexe une simple interconnexion entre, par exemple, un lecteur de musique et un magnétoscope numérique. De plus, tout le monde ne dispose pas d'un PC chez lui.

A cet effet, l'invention propose une interface entre deux bus de communication qui utilisent au moins deux protocoles différents. L'interface selon l'invention est essentiellement bâtie autour d'une mémoire volatile comportant au moins deux ports d'accès couplée à deux circuits de transcodage. Chaque circuit de transcodage est propre à chacun des protocoles à interfacer. L'utilisation d'une mémoire à au moins deux ports, chaque port étant couplé à un circuit de transcodage, permet de s'affranchir d'une gestion de mémoire complexe, ce qui simplifie énormément la constitution de l'interface.

Un premier aspect de l'invention se rapporte ainsi à une interface de communication selon la revendication 1. Avantageusement, le circuit de contrôle synchronise le deuxième circuit de transcodage afin que celui-ci ne déclenche l'étape de codage qu'après que le premier circuit de transcodage aura stocké dans la mémoire les données suffisantes pour un formatage selon le deuxième protocole.

Selon un mode de réalisation particulier, l'interface comporte N bus de communication utilisant N protocoles de communication, chaque protocole ayant des spécifications propres pour le formatage et l'empaquetage, et N circuits de transcodage supportant respectivement chacun des N protocoles, chaque circuit de transcodage permettant d'empaqueter et de formater des données afin de les transmettre par l'intermédiaire de l'un des N bus selon les spécifications de l'un des N protocoles, et/ou permettant de déformater et désempaqueter des données reçues de l'un des N bus selon les spécifications du premier protocole. La mémoire comporte N ports, chaque port de ladite mémoire étant couplé à l'un des N circuits de transcodage. N est un nombre entier supérieur à deux. Le circuit de commande est muni de moyens de sélection pour commander de manière sélective les circuits de transcodage à mettre en oeuvre pour partager un même groupe de données par l'intermédiaire de la mémoire.

Conformément à la revendication 5, un deuxième aspect de l'invention se rapporte à un circuit intégré comportant une interface selon le premier aspect.

Un troisième aspect de l'invention se rapporte enfin à un procédé d'interfaçage selon la revendication 6.

Préférentiellement, le premier circuit de transcodage stocke également dans la mémoire des informations annexes aux données.

L'interfaçage entre les deux bus peut se faire de manière sélective parmi N bus couplés à N circuits de transcodage fonctionnant chacun en conformité avec un protocole de communication différent choisi parmi N protocoles, les N circuits de transcodage échangeant des données entre eux par l'intermédiaire d'une mémoire disposant de N ports, chaque port étant couplé à l'un des N circuits de transcodage N étant supérieur ou égal à deux, le circuit de commande sélectionnant au moins un circuit de transcodage à mettre en oeuvre.

Des modes de réalisations avantageux sont présentés dans les revendications dépendantes.

L'invention sera mieux comprise et d'autres particularités et avantages apparaîtront à la lecture de la description faite en référence aux dessins annexés parmi lesquels :
- la figure 1 représente un ordinateur personnel permettant d'interfacer deux protocoles selon l'état de la technique ;
- la figure 2 montre un premier mode de réalisation d'un dispositif d'interface entre deux protocoles selon l'invention ;
- la figure 3 montre un deuxième mode de réalisation d'un dispositif d'interface selon l'invention.

L'interface représentée sur la figure 2 comporte une mémoire double port 10, deux circuits de transcodage 11 et 12 connectés respectivement à chacun des deux ports de la mémoire 10, un circuit de contrôle 13 couplé aux deux circuits de transcodage 11 et 12, et deux connecteurs 14 et 15 connectés respectivement aux deux circuits de transcodage 11 et 12. La mémoire double port 10 est un circuit connu disposant d'une zone de mémoire centrale et de deux ports d'entrée/sortie. Chacun des ports d'entrée/sortie permet de contrôler la mémoire 10 indépendamment de l'autre port.

Chaque circuit de transcodage 11 et 12 est dédié à un protocole de communication. Le circuit de transcodage 11 est dédié à un protocole A, par exemple un protocole défini selon le standard USB et le circuit de transcodage 12 est dédié à un protocole B, par exemple un protocole défini selon le standard IEEE1394. L'homme du métier peut se référer, d'une part au standard USB, et d'autre part au standard IEEE1394 pour plus de détails sur les deux protocoles et la constitution des deux circuits de transcodage 11 et 12. Chaque circuit de transcodage 11 et 12 est respectivement connecté à un connecteur 14 et 15 afin de pouvoir être relié à un bus de communication dédié au protocole supporté par ledit circuit de transcodage. Chaque circuit de transcodage 11 et 12 est apte à recevoir et/ou envoyer des données selon le protocole auquel il est dédié. Chaque circuit de transcodage 11 et 12 est également apte à décoder les données afin d'écrire lesdites données dans la mémoire sous une forme décodée et/ou à lire des données dans la mémoire 10 afin de les encoder puis de les envoyer sous un format correspondant au protocole auquel il est dédié.

Par décodage, il faut comprendre, d'une part le désempaquetage des données, le déformatage et le décodage éventuel selon un code correcteur d'erreurs. De même par encodage, il faut comprendre, d'une part le empaquetage des données, le formatage et le codage éventuel selon un code correcteur d'erreurs.

En plus des données, les protocoles peuvent utiliser des informations annexes, telles que le débit, le type de données transmis, l'adresse du dispositif auquel est destiné les données, etc. Ces informations annexes sont également stockée dans la mémoire 10 afin d'être adaptée d'un standard à l'autre lorsque cela est possible et/ou présente un intérêt.

Le circuit de contrôle 13 sert à synchroniser les circuits de transcodage 11 et 12 entre eux. Le circuit de contrôle 13 reçoit des informations relatives au nombre de données écrites et lues dans la mémoire 10 par les circuits de transcodage 11 et 12. Des adresses peuvent être échangées entre les circuits de transcodage 11 et 12 et le circuit de contrôle 13 afin de gérer l'occupation de la mémoire et également des zones dédiées aux données transmises et aux informations annexes.

Il va être à présent indiqué, comment fonctionne ladite interface. Si des données sont reçues par le circuit de transcodage 11 via le connecteur 14, l'interface de transcodage 11 va indiquer au circuit de contrôle 13 qu'elle reçoit des données. A partir du paquet de données reçues, le circuit de transcodage 11 extrait toutes les informations annexes aux données et les inscrit dans une zone de la mémoire 10 dédiée à ce type d'information. Le paquet de données est ensuite désembrouillé, éventuellement décodé si le protocole utilise un code de correction d'erreur et les données brutes sont ensuite écrites dans une zone de données de la mémoire 10. A la fin de la réception et du décodage de chaque paquet reçu par le circuit de transcodage 11, le circuit de contrôle 13 est informé du nombre de données présentes dans la mémoire 10. Lorsque la mémoire contient un nombre de données suffisant pour envoyer un paquet de données en conformité avec le protocole B, le circuit de contrôle 13 déclenche l'encodage du circuit de transcodage 12. Le circuit de transcodage 12 va lire dans la mémoire 10 les informations annexes permettant l'encodage, par exemple les informations de type de données, de débit, etc. nécessaires pour le protocole B. Le circuit de transcodage 12 va créer l'en-tête du paquet de données en vue d'une transmission sur le deuxième bus par l'intermédiaire du connecteur 15. Les données sont ensuite lues par le circuit de transcodage 12 dans la mémoire 10, ces données sont encodées, mises en paquet et expédiées sur le deuxième bus de communication. Lorsqu'un paquet de données est envoyé par le circuit de transcodage 12, celui-ci l'indique au circuit de contrôle 13 qui peut à son tour indiquer au circuit de transcodage 11 que l'espace mémoire correspondant est à nouveau libre.

Dans le cas d'un transfert allant du deuxième bus vers le premier bus, le fonctionnement est inversé. Ainsi le circuit de transcodage 12 va désempaqueter les données pour inscrire dans la mémoire 10, d'une part, les données et, d'autre part les informations annexes de communication. Le circuit de contrôle 13 déclenche l'empaquetage par le circuit de transcodage 11 afin d'envoyer les données sur le premier bus par l'intermédiaire du connecteur 14.

Le circuit de contrôle 13 peut en outre disposer d'une connexion externe permettant de spécifier si l'interface se comporte de manière monodirectionnelle ou bidirectionnelle ou si des paramètres particuliers doivent être pris en compte par l'un des circuits de transcodage 11 ou 12.

Une telle interface peut être simplement interconnecté entre un port de communication selon un protocole A et un port de communication selon un protocole B via des bus respectifs. De manière pratique, l'interface peut être réalisée à l'aide d'un unique circuit intégré incluant la mémoire 10, les deux circuits de transcodage 11 et 12 et le circuit de contrôle 13. Deux connecteurs externes 14 et 15 sont reliés au circuit intégré afin de pouvoir connecter les bus propres à chaque protocole. L'alimentation du circuit se fait directement par les bus qui disposent d'une fourniture d'alimentation comme c'est par exemple le cas pour les standards USB et IEEE1394. L'ensemble devient alors un simple petit dispositif d'interconnexion de câble de taille relativement réduite et très aisé à utiliser pour tout utilisateur.

Il a été présenté un premier mode de réalisation qui permet d'interfacer deux protocoles de communication sur bus série tels que définis par les standards USB et IEEE1394, cependant, d'autres protocoles, par exemple un protocole d'échange de données sur un bus parallèle, peuvent nécessiter des interconnexions avec ces deux protocoles. Un tel dispositif ne permet pas d'interconnecter plus de deux protocoles.

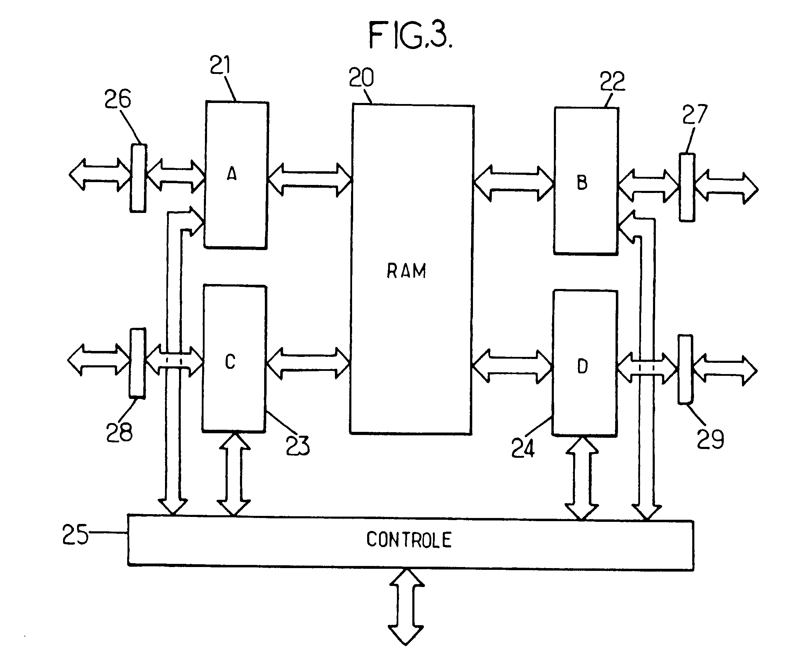

Un deuxième mode de réalisation représenté sur la figure 3 généralise le principe et permet d'avoir un dispositif relativement compact permettant d'interfacer plusieurs types de protocoles. L'interface de la figure 3 comporte une mémoire multiport 20, par exemple une mémoire 20 à quatre ports, quatre circuits de transcodage 21 à 24 fonctionnant selon quatre protocoles différents A, B, C et D et respectivement couplés à chaque port de la mémoire 20, un circuit de contrôle 25 couplé aux quatre circuits de transcodage, et quatre connecteurs 26 à 29 respectivement couplés aux quatre circuits de transcodage 21 à 24. Le circuit de contrôle 25 est ici obligatoirement muni de moyens de sélection qui permettent de sélectionner entre quels bus s'effectue une communication. Le fonctionnement d'un tel circuit est le même que celui de l'interface de la figure 2. Mais préalablement à un transfert, l'utilisateur doit indiquer au circuit de contrôle 25 entre quels circuits de transcodage 21 à 24 se fait l'échange d'informations par l'intermédiaire de la mémoire 20.

L'utilisateur devra alors enficher des câbles dans les connecteurs 26 à 29 correspondants. La sélection peut s'effectuer, soit à l'aide d'un commutateur, soit par détection de la présence d'un câble enfiché dans l'un des connecteurs. L'alimentation s'effectue par exemple en récupérant une tension d'alimentation à partir d'un connecteur. Là encore, un simple circuit intégré peut intégrer la mémoire 20 ainsi que les quatre circuits de transcodage 21 à 24 et le circuit de contrôle 25, un boîtier contenant le circuit intégré devra comporter les quatre connecteurs 26 à 29 et également un commutateur pour indiquer au circuit de contrôle quelle est la connexion à effectuer.

## Revendications

1. Interface de communication entre au moins un premier et un deuxième bus de communication utilisant respectivement un premier et un deuxième protocole, chaque protocole ayant des spécifications propres pour le codage de données, **caractérisé en ce qu'**elle comporte:
- une mémoire (10, 20) comportant au moins un premier et un deuxième port d'accès, chacun des ports étant commandable indépendamment l'un de l'autre;
- un premier circuit de transcodage (11, 21) supportant le premier protocole, et étant couplé au premier port d'accès de la mémoire (10, 20), le premier circuit de transcodage (11, 21) permettant de coder des données situées dans la mémoire (10, 20) afin de les transmettre vers le premier bus selon les spécifications du premier protocole, et/ou permettant de décoder des données reçues du premier bus selon les spécifications du premier protocole pour les stocker dans la mémoire (10, 20);
- un deuxième circuit de transcodage (12, 22) supportant le deuxième protocole, et étant couplé au deuxième port d'accès de la mémoire (10, 20), le deuxième circuit de transcodage (12, 22) permettant de coder des données situées dans la mémoire (10, 20) afin de les transmettre vers le deuxième bus selon les spécifications du deuxième protocole, et/ou permettant de décoder des données reçues du deuxième bus selon les spécifications du deuxième protocole pour les stocker dans la mémoire (10, 20); et,
- un circuit de contrôle (13) couplé aux premier et deuxième circuits de transcodage (11, 12, 21, 22) pour assurer la synchronisation entre les deux circuits, afin que le codage des données par le deuxième circuit de transcodage ne soit déclenché qu'après que le premier circuit de transcodage aura stocké dans la mémoire des données suffisantes pour un formatage selon les spécifications du deuxième protocole.

2. Interface selon la revendication 1, comportant N bus de communication utilisant N protocoles de communication, chaque protocole ayant des spécifications propres pour le codage de données, et N circuits de transcodage (21 à 24) supportant respectivement chacun des N protocoles, chaque circuit de transcodage (21 à 24) permettant de coder des données afin de les transmettre par l'intermédiaire de l'un des N bus selon les spécifications de l'un des N protocoles, et/ou permettant de décoder des données reçues de l'un des N bus selon les spécifications du premier protocole, dans laquelle la mémoire (20) comporte N ports, chaque port de ladite mémoire (20) étant couplé à l'un des N circuits de transcodage (21 à 24), N étant un nombre entier supérieur à deux, et dans laquelle le circuit de commande (25) est muni de moyens de sélection pour commander de manière sélective les circuits de transcodage (21 à 24) à mettre en oeuvre pour partager un même groupe de données par l'intermédiaire de la mémoire (20).

3. Interface selon l'une quelconque des revendications 1 et 2, dans laquelle au moins un des protocoles est un protocole de communication série.

4. Interface de communication selon la revendication 3, dans laquelle un des protocoles est conforme au standard IEEE 1394 et/ou un des protocoles est conforme au standard USB.

5. Circuit intégré comportant une interface de communication selon l'une quelconque des revendications 1 à 4.

6. Procédé d'interfaçage entre au moins un premier et un deuxième bus de communication utilisant au moins un premier et un deuxième protocole de communication respectivement, chaque protocole ayant des spécifications propres pour le codage de données, **caractérisé en ce qu'**il comporte les étapes suivantes:
- réception par un premier circuit de transcodage (11) supportant le premier protocole de donnée provenant du premier bus;
- décodage des données reçues, par le premier circuit de transcodage (11) selon les spécifications du premier protocole;
- stockage des données décodées dans une mémoire (10) par l'intermédiaire d'un premier port de ladite mémoire (10);
- lecture des données décodées par un deuxième circuit de transcodage (12) supportant le deuxième protocole, la lecture s'effectuant par l'intermédiaire d'un deuxième port de la mémoire (10);
- codage des données lues selon les spécifications du deuxième protocole, par le deuxième circuit de transcodage (12);
- envoi sur le deuxième bus des données codées selon les spécifications du deuxième protocole;
et dans lequel un circuit de contrôle (13) synchronise le deuxième circuit de transcodage (12) afin que celui-ci ne déclenche l'étape de codage des données qu'après que le premier circuit de transcodage (11) aura stocké dans la mémoire (10) des données suffisantes pour un formatage selon les spécifications du deuxième protocole.

7. Procédé selon la revendication 6, dans lequel le premier circuit de transcodage (11) stocke également dans la mémoire (10) des informations annexes aux données.

8. Procédé selon l'une quelconque des revendications 6 et 7, dans lequel l'interfaçage entre les deux bus se fait de manière sélective parmi N bus couplés à N circuits de transcodage (21 à 24) fonctionnant chacun en conformité avec un protocole de communication différent choisi parmi N protocoles, les N circuits de transcodage (21 à 24) échangeant des données entre eux par l'intermédiaire d'une mémoire (20) disposant de N ports, chaque port étant couplé à l'un des N circuits de transcodage (21 à 24) N étant supérieur ou égal à deux, le circuit de commande (25) sélectionnant au moins un circuit de transcodage à mettre en oeuvre.

9. Procédé selon l'une quelconque des revendications 6 à 8, dans lequel au moins un des protocoles est un protocole de communication série.

10. Procédé selon la revendication 9, dans lequel un des protocoles est conforme au standard IEEE 1394 et/ou un des protocoles est conforme au standard USB.

## Claims

1. Communication interface between at least one first and one second communication bus using respectively a first and a second protocol, each protocol having specifications suitable for the coding of data, **characterized in that** it comprises:
- a memory (10, 20) comprising at least one first and one second access port, each of the ports being controllable independently of one another;
- a first transcoding circuit (11, 21) supporting the first protocol, and being coupled to the first access port of the memory (10, 20), the first transcoding circuit (11, 21) making it possible to code data situated in the memory (10, 20) so as to transmit them to the first bus according to the specifications of the first protocol, and/or making it possible to decode data received from the first bus according to the specifications of the first protocol so as to store them in the memory (10, 20);
- a second transcoding circuit (12, 22) supporting the second protocol, and being coupled to the second access port of the memory (10, 20), the second transcoding circuit (12, 22) making it possible to code data situated in the memory (10, 20) so as to transmit them to the second bus according to the specifications of the second protocol, and/or making it possible to decode data received from the second bus according to the specifications of the second protocol so as to store them in the memory (10, 20); and,
- a control circuit (13) coupled to the first and second transcoding circuits (11, 12, 21, 22) for ensuring synchronization between the two circuits, so that the coding of data by the second transcoding circuit be triggered only after the first transcoding circuit has stored in the memory the data sufficient for a formatting according to the specifications of the second protocol.

2. Interface according to Claim 1, comprising N communication buses using N communication protocols, each protocol having specifications suitable for coding data, and N transcoding circuits (21 to 24) respectively supporting each of the N protocols, each transcoding circuit (21 to 24) making it possible to code data so as to transmit them by way of one of the N buses according to the specifications of one of the N protocols, and/or making it possible to decode data received from one of the N buses according to the specifications of the first protocol, in which the memory (20) comprises N ports, each port of the said memory (20) being coupled to one of the N transcoding circuits (21 to 24), N being an integer greater than two, and in which the control circuit (25) is furnished with means of selection for selectively controlling the transcoding circuits (21 to 24) to be implemented so as to share one and the same group of data by way of the memory (20).

3. Interface according to one of Claims 1 and 2, in which at least one of the protocols is a serial communication protocol.

4. Communication interface according to Claim 3, in which one of the protocols complies with the IEEE 1394 standard and/or one of the protocols complies with the USB standard.

5. Integrated circuit comprising an interface according to one of Claims 1 to 45.

6. Method of interfacing between at least one first and one second communication bus using respectively a first and a second communication protocol, each protocol having specifications suitable for the coding of data, **characterized in that** it comprises the following steps:
- reception by a first transcoding circuit (11) supporting the first protocol of data originating from the first bus;
- decoding of the data received, by the first transcoding circuit (11) according to the specifications of the first protocol;
- storage of the data decoded in a memory (10) by way of a first port of the said memory (11);
- reading of the data decoded by a second transcoding circuit (12) supporting the second protocol, the reading being performed by way of a second port of the memory (10);
- coding of the data read according to the specifications of the second protocol, by the second transcoding circuit (12);
- despatching over the second bus of the data coded according to the specifications of the second protocol;
and wherein a control circuit (13) synchronizes the second transcoding circuit (12) so that the latter triggers the step of coding data only after the first transcoding circuit (11) has stored in the memory the data sufficient for a formatting according to the specifications of the second protocol.

7. Method according to Claim 6, in which the first transcoding circuit (11) also stores in the memory (10) information supplementing the data.

8. Method according to one of Claims 6 and 7, in which the interfacing between the two buses is carried out selectively among N buses coupled to N transcoding circuits (21 to 24) each operating in compliance with a different communication protocol chosen from among N protocols, the N transcoding circuits (21 to 24) exchanging data between themselves by way of a memory (20) having N ports, each port being coupled to one of the N transcoding circuits (21 to 24) N being greater than or equal to two, the control circuit (25) selecting at least one transcoding circuit to be implemented.

9. Method according to one of Claims 6 to 8, in which at least one of the protocols is a serial communication protocol.

10. Method according to Claim 9, in which one of the protocols complies with the IEEE 1394 standard and/or one of the protocols complies with the USB standard.

## Patentansprüche

1. Kommunikationsschnittstelle zwischen wenigstens einem ersten und einem zweiten Kommunikationsbus, der ein erstes bzw. ein zweites Protokoll verwendet, wobei jedes Protokoll eigene Spezifikationen zur Codierung von Daten aufweist, **dadurch gekennzeichnet, dass** sie umfasst:
- einen Speicher (10, 20) mit wenigstens einem ersten und einem zweiten Zugriffsport, wobei jeder Port unabhängig vom anderen steuerbar ist;
- einen ersten Transcodierschaltkreis (11, 21), der das erste Protokoll unterstützt und mit dem ersten Zugriffsport des Speichers (10, 20) verbunden ist, wobei der erste Transcodierschaltkreis (11, 21) das Codieren von im Speicher (10, 20) enthaltenen Daten erlaubt, um diese gemäß den Spezifikationen des ersten Protokolls zum ersten Bus zu übertragen, und/oder das Decodieren von Daten, die vom ersten Bus empfangen wurden, gemäß den Spezifikationen des ersten Protokolls erlaubt, um diese im Speicher (10, 20) zu speichern;
- einen zweiten Transcodierschaltkreis (12, 22), der das zweite Protokoll unterstützt und mit dem zweiten Zugriffsport des Speichers (10, 20) verbunden ist, wobei der zweite Transcodierschaltkreis (12, 22) das Codieren von im Speicher (10, 20) enthaltenen Daten erlaubt, um diese gemäß den Spezifikationen des zweiten Protokolls zum zweiten Bus zu übertagen, und/oder das Decodieren von Daten, die vom zweiten Bus empfangen wurden, gemäß den Spezifikationen des zweiten Protokolls erlaubt, um diese im Speicher (10, 20) zu speichern; und
- einen Steuerschaltkreis (13), der mit dem ersten und dem zweiten Transcodierschaltkreis (11, 12, 21, 22) verbunden ist, um die Synchronisierung zwischen den beiden Schaltkreisen sicherzustellen, damit das Codieren der Daten durch den zweiten Transcodierschaltkreis erst beginnt, nachdem der erste Transcodierschaltkreis genügend Daten für eine Formatierung gemäß den Spezifikationen des zweiten Protokolls gespeichert hat.

2. Schnittstelle nach Anspruch 1,
mit N Kommunikationsbussen, die N Kommunikationsprotokolle verwenden, wobei jedes Protokoll eigene Spezifikationen zur Codierung von Daten aufweist, und N Transcodierschaltkreisen, die jeweils jedes der N Protokolle unterstützen, wobei jeder Transcodierschaltkreis (21 bis 24) das Codieren von Daten erlaubt, um diese über einen der N Busse gemäß den Spezifikationen eines der N Protokolle zu übertragen, und/oder das Decodieren von Daten, die von einem der N Busse empfangen wurden, gemäß den Spezifikationen des ersten Protokolls erlaubt, bei der der Speicher (20) N Ports umfasst, wobei jeder Port des Speichers (20) mit einem der N Transcodierschaltkreise (21 bis 24) verbunden ist, wobei N eine ganze Zahl größer zwei ist, und bei der der Steuerschaltkreis (25) mit Selektionsmitteln versehen ist, um die auszuführenden Transcodierschaltkreise (21 bis 24) selektiv zu steuern, um über den Speicher (20) ein und dieselbe Datengruppe gemeinsam zu nutzen.

3. Schnittstelle nach einem der Ansprüche 1 oder 2,
bei der wenigstens eines der Protokolle ein serielles Kommunikationsprotokoll ist.

4. Schnittstelle nach Anspruch 3,
bei der eines der Protokolle dem Standard IEEE 1394 entspricht und/oder eines der Protokolle dem USB-Standard entspricht.

5. Integrierter Schaltkreis mit einer Kommunikationsschnittstelle nach einem der Ansprüche 1 bis 4.

6. Verfahren zur Schaffung einer Schnittstelle zwischen wenigstens einem ersten und einem zweiten Kommunikationsbus, der wenigstens ein erstes bzw. ein zweites Kommunikationsprotokoll verwendet, wobei jedes Protokoll eigene Spezifikationen zur Codierung von Daten aufweist, **dadurch gekennzeichnet, dass** es die folgenden Schritte umfasst:
- Empfangen von Daten, die vom ersten Bus stammen, durch einen ersten, das erste Protokoll unterstützenden Transcodierschaltkreis (11);
- Decodieren der empfangenen Daten gemäß den Spezifikationen des ersten Protokolls durch den ersten Transcodierschaltkreis (11);
- Speichern der decodierten Daten in einem Speicher (10) über einen ersten Port des Speichers (10);
- Lesen der decodierten Daten durch einen zweiten, das zweite Protokoll unterstützenden Transcodierschaltkreis (12), wobei der Lesevorgang über einen zweiten Port des Speichers (10) erfolgt;
- Codieren der gelesenen Daten gemäß den Spezifikationen des zweiten Protokolls durch den zweiten Transcodierschaltkreis (12);
- Senden der gemäß den Spezifikationen des zweiten Protokolls codierten Daten zum zweiten Bus;
und bei dem ein Steuerschaltkreis (13) den zweiten Transcodierschaltkreis (12) synchronisiert, damit dieser mit dem Codieren der Daten erst beginnt, nachdem der erste Transcodierschaltkreis (11) genügend Daten für eine Formatierung gemäß den Spezifikationen des zweiten Protokolls gespeichert hat.

7. Verfahren nach Anspruch 6,
bei dem der erste Transcodierschaltkreis (11) im Speicher (10) auch zusätzliche Informationen zu den Daten speichert.

8. Verfahren nach einem der Ansprüche 6 oder 7,
bei dem die Schaffung einer Schnittstelle zwischen den beiden Bussen selektiv aus N Bussen erfolgt, die mit N Transcodierschaltkreisen (21 bis 24) verbunden sind, welche jeweils in Übereinstimmung mit einem unterschiedlichen Kommunikationsprotokoll, das aus N Protokollen gewählt ist, funktionieren, wobei die N Transcodierschaltkreise (21 bis 24) untereinander Daten über einen Speicher (20) austauschen, der über N Ports verfügt, wobei jeder Port mit einem der N Transcodierschaltkreise (21 bis 24) verbunden ist, wobei N größer oder gleich zwei ist, wobei der Steuerkreis (25) wenigstens einen auszuführenden Transcodierschaltkreis auswählt.

9. Verfahren nach einem der Ansprüche 6 bis 8,
bei dem wenigstens eines der Protokolle ein serielles Kommunikationsprotokoll ist.

10. Verfahren nach Anspruch 9,
bei dem eines der Protokolle dem Standard IEEE 1394 entspricht und/oder eines der Protokolle dem USB-Standard entspricht.
